# EUROPEAN PATENT APPLICATION

(11) **EP 4 498 573 A1**
(43) Date of publication of application: **29.01.2025**
(21) Application number: 23187522.0
(22) Date of filing: 25.07.2023
(51) Int. Cl.: H02K 1/18, H02K 15/02, H02K 15/14, H02K 5/24, H02K 15/00

(54) **AN ELECTRIC MOTOR AND A METHOD FOR ASSEMBLING AN ELECTRIC MOTOR**

(71) Applicant: ABB SCHWEIZ AG, 5400 Baden (CH)
(72) Inventor: Moioli, Giuseppe, 20037 Paderno Dugnano (IT); Kosonen, Jani, 65320 Vaasa (FI); Holopainen, Timo, 00380 Helsinki (FI); Bayat, Reza, 00380 Helsinki (FI)
(74) Representative: Kolster Oy Ab

(57) **Abstract**

This invention relates to an electric motor (1) which comprises a stator (2) with an outer perimeter provided with beams (4) and a stator frame (5) surrounding the stator (2) and comprising at least two intermediate plates (6) having openings (7) for receiving the stator (2). For enabling simplified assembly of the electric motor (1), the intermediate plates (6) comprise first contact surfaces (9) forming a tight contact with corresponding second contact surfaces (11) provided on the beams (4). The electric motor (1) is provided with bolts (13) extending through the intermediate plates (6) between the outside of the stator frame (5) and the openings (7) at an exactly predetermined position of each of the first contact surfaces (9) and engaging threaded holes (14) provided to an exactly predetermined position of each of the second contact surfaces (11).

## Description

### BACKGROUND OF THE INVENTION

### FIELD OF THE INVENTION

This invention relates to an electric motor and a method for assembling an electric motor.

### DESCRIPTION OF PRIOR ART

In the manufacture of industrial electric motors, the motor components are typically manufactured separately and assembled first into several separate sub-entities forming the structural base units of the motor. These structural base units include, for example, the stator and rotor assemblies, as well as the stator frame. These separate sub-entities are then assembled into the final motor unit during later steps of the manufacturing process. The final motor assembly is typically performed using both shrink fit connection and mechanical connector elements between the sub-entities, such that reception points for the mechanical connector elements need to be prepared and carefully positioned at corresponding connecting surfaces at each of the sub-entities to be assembled.

A challenge related to electric motors is that even very small deviations in the dimensions or mutual locations of the components of the electric motor may have a significant impact on the properties and performance of the motor. Problems in the form of vibrations may occur, in case the components of the electric motor have not been rigidly attached to each other at exactly the correct mutual positions.

### SUMMARY OF THE INVENTION

An object of the present invention is to solve the above-mentioned drawbacks and to provide a solution for simplified electric motor assembly and robust connection between a stator and a stator frame. These objects are achieved with a method according to independent claim 1 and an electric motor according to independent claim 5.

By machining a stator frame such that it is drilled through intermediate plates at an exactly predetermined position of each of first contact surfaces of the intermediate plates, and by machining a stator by preparing a threaded hole at an exactly predetermined position of each of second contact surfaces provided on beams of the stator, and by then inserting the stator into the stator frame, the stator frame and the stator may be machined separately to conveniently provide a robust connection between the stator and the stator frame.

Preferred embodiments of the invention are disclosed in the dependent claims.

### BRIEF DESCRIPTION OF DRAWINGS

In the following the present invention will be described in closer detail by way of example and with reference to the attached drawings, in which
Figure 1 illustrates one embodiment of an electric motor as seen diagonally from above,
Figure 2 illustrates a stator core of the electric motor of Figure 1 as seen diagonally from above,
Figure 3 illustrates a crosscut section of the electric motor of Figure 1 as seen directly from the front,
Figure 4 illustrates a partial view of the stator core of Figure 2,
Figure 5 illustrates a detail of the electric motor of Figure 1 as seen diagonally from above,
Figure 6 illustrates a stator frame of the electric motor of Figure 1 attached to a machining station as seen directly from the side, and
Figure 7 illustrates the stator core of Figure 2 attached to a machining station as seen directly from the side.

### DESCRIPTION OF AT LEAST ONE EMBODIMENT

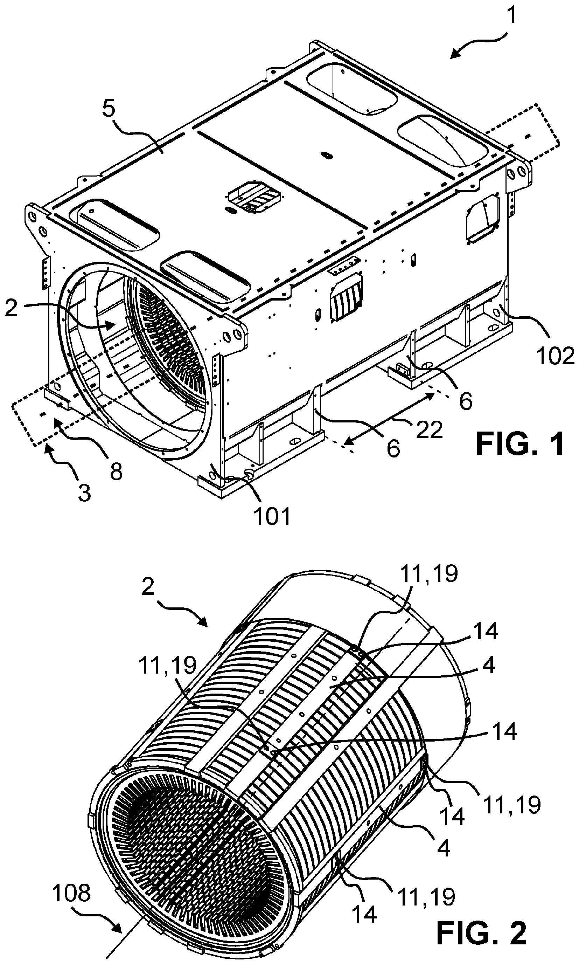

Figure 1 illustrates one embodiment of an electric motor 1, wherein a rotor included in the motor assembly has been faded out and is only presented with a dashed line, so as to more clearly illustrate the other structural units of the motor. As seen in this example, the electric motor 1 comprises a stator 2 operationally connecting to the rotor 3 for providing torque to it, in other words such that in operation, a magnetic field is created in the stator 2 to generate torque to a shaft of the rotor and causing it to rotate. The rotor 3 in said example is arranged inside the stator 2 to be coaxial with it, and it may represent, for example, any rotor construction known from prior art. The electric motor 1 also comprises a stator frame 5 surrounding the stator 2, wherein in the example of Figure 1 the stator frame 5 comprises two intermediate plates 6 having coaxially aligned openings 7 for receiving the stator 2. Said intermediate plates 6 are in the example arranged between frame end shields 101, 102, and extend in a substantially perpendicular direction with respect to the longitudinal direction of the stator 2 and the rotor 3. In other embodiments of the electric motor 1, the number and positioning of the intermediate plates 6 may also deviate from the example of Figure 1, such that also a plurality of intermediate plates 6 may be included in the construction.

To further illustrate the structure of the stator 2, Figure 2 illustrates a stator core assembly of the electric motor 1 of Figure 1 as separated from the rest of the motor construction. As best seen in this example, the outer perimeter of the stator 2, which in this case corresponds to the circumference of the cylindrically shaped stator 2, is provided with beams 4 extending in a longitudinal direction of the stator 2. Said beams 4 may be used for, for example, binding together laminations forming the core of the stator 2 and to provide added rigidity to the stator construction, and their number as well as positioning at the outer perimeter of the stator 2 may deviate from the example of Figure 2 in other embodiments of the electric motor 1.

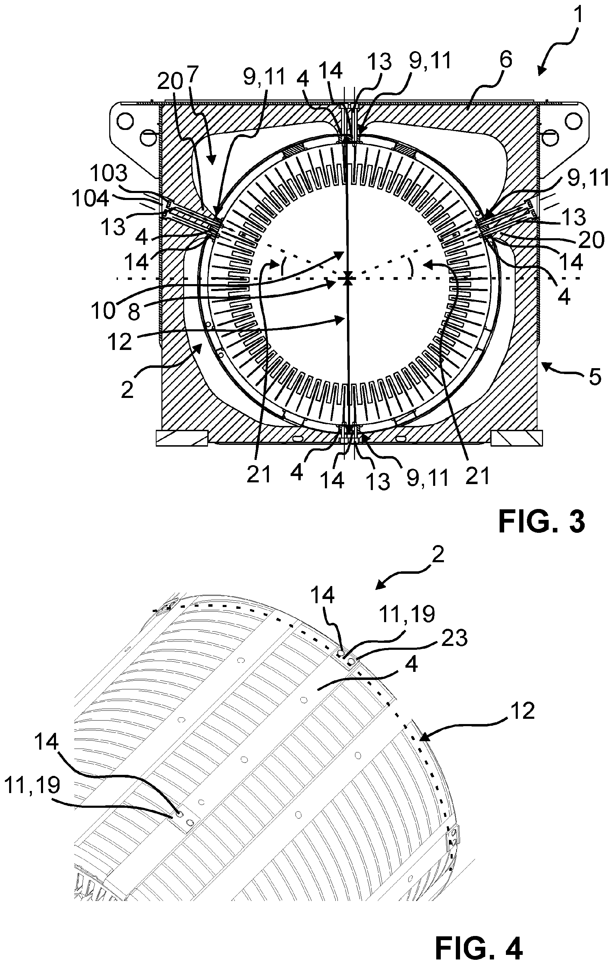

To further illustrate the structure of the stator frame 5 and of the reciprocal arrangement of the stator 2 and the stator frame, Figure 3 illustrates a crosscut section of the electric motor 1 of Figure 1 in a direction perpendicular to the longitudinal direction of the stator 2. As best seen in this example, the at least two intermediate plates 6 of the stator frame comprise first contact surfaces 9 facing towards a center axis 8, said center axis 8 being located in the middle section of the stator frame 5 and oriented along the longitudinal direction of the frame, such that the first contact surfaces 9 together define a circle with a first radius 10. In other words, said first contact surfaces 9 at each of the intermediate plates 6 are formed as curved surfaces following the curvature of a circle, the circle having the first radius 10 and the center axis 8, the center axis 8 being shared between the first contact surfaces 9 of adjacent intermediate plates 6. In the example of Figure 3, some of the first contact surfaces 9 are provided to protrusions 20 extending towards the center of the openings 7 at each of the openings 7, in other words such that the protrusions 20 extend from the perimeter of the openings 7 and the first contact surfaces 9 are provided to their surface facing towards the center of the openings 7. Favorably, at least one of the first contact surfaces 9 is arranged this way.

As best seen in the example of Figure 3, the first contact surfaces 9 form a tight contact with corresponding second contact surfaces 11 provided on the beams 4. In more detail, said second contact surfaces 11, which in the example of Figure 3 are provided to the surfaces of the beams 4 facing away from the stator 2 in a radial direction, define together a circle with a second radius 12 which is slightly smaller than the first radius 10, thereby enabling said tight contact to be formed between the first 9 and the corresponding second contact surfaces 11. In some embodiments of the electric motor 1, the first contact surfaces 9 may be connected to the corresponding second contact surfaces 11 through a shrink fit, wherein the contact between the first 9 and the second contact surfaces 11 may be formed in a condition wherein the stator frame 5, at least in the vicinity of the first contact surfaces 9, is heated to an elevated temperature. Thus, the shrink fit connection is formed as a result of cooling-associated shrinking of the intermediate plates 6 and of the circle defined by the first contact surfaces 9 to tightly surround the stator 2.

To further illustrate the arrangement of the second contact surfaces 11 at the stator 2, Figure 4 illustrates a partial view of the stator 2 of Figure 2. As best seen in this figure, in the stator 2 according to the example of Figures 2 and 4 the second contact surfaces 11 are provided to contact plates 19 provided on the beams 4. More precisely, the contact plates 19 are provided on the surfaces of the beams 4 facing away from the stator 2 in the radial direction, such that the second contact surfaces 11 are formed on the outer surfaces of the contact plates 19 and are thereby elevated from the surface level of the beams 4. With the arrangement as described, the shape and dimensions of the second contact surfaces 11 may be adjusted by only affecting the contact plates 19, without needing to affect the beams 4. The contact plates 19 may comprise, for example, steel plates having a rigid structure so as to resist any deformations caused by, for example, forces subjected towards the stator-stator frame contact interface during use of the electric motor 1. In other embodiments of the electric motor 1, only one or some of the second contact surfaces 11 may be provided to the contact plates 19, or they may be completely omitted such that the second contact surfaces 11 are provided directly on the beams 4.

In the example of Figure 4, some of the second contact surfaces 11 are provided with a flange 23 for inhibiting movement of the stator 2 through the openings 7 past a predetermined position. More precisely, each of the second contact surfaces 11 provided on contact plates 19 close to the rear end of the stator 2 are provided with the flanges 23 extending away from the stator 2 in the radial direction of the stator 2, such that when the stator 2 is moved through the openings 7 until said predetermined position, the flanges 23 come into contact with the intermediate plates 6. With the arrangement as described, the flanges 23 may be used as an assisting surface for correctly positioning the stator 2 in relation to the stator core 5 in the axial direction of the stator 2.

As best seen in the example of Figure 3, the electric motor 1 is provided with bolts 13 extending through the intermediate plates 6 between the outside of the stator frame 5 and the openings 7. More precisely, the electric motor 1 is provided with drilled holes extending through the outer surface of the stator frame 5 and the intermediate plates 6 with a substantially perpendicular orientation with respect to the center axis 8, and the bolts 13 are provided to said drilled holes. The bolts 13 extend at an exactly predetermined position of each of the first contact surfaces 9, in other words such that they extend to the openings 7 at said exactly predetermined positions, and engage threaded holes 14 provided to an exactly predetermined position of each of the second contact surfaces 11. In other words, said threaded holes 14 are provided at positions exactly matching the positions of the corresponding drilled holes of the stator frame 5, such that a continuous, undisrupted pathway is created for the bolts 13 extending through the stator frame 5 to the stator 2.

Said drilled holes of the stator frame 5 may be provided without a thread so that the bolts 13 threadedly connect only to the threaded holes 14 provided to the second contact surfaces 11. Each bolt 13 may also be provided with a bolt head 103 engaging the opening area of the corresponding drilled hole of the stator frame 5, such that the bolts 13 may be tensioned between the stator 2 and the stator frame 5. With the arrangement as described, the stator 2 may be tightened against the stator frame 5 at each pair of the first 9 and the second contact surfaces 11, such that forces subjected towards the stator-stator frame contact interface during use of the electric motor 1 are carried by the bolts 13 as well as by friction between the first 9 and the second contact surfaces 11. Thereby, said arrangement may be used for providing support against forces affecting the stator-stator frame contact interface both in radial and tangential directions of the center axis 8, as opposed to an arrangement where, for example, non-tensioned connecting pins are used for preventing the axial movement of the stator in relation to the frame and the radial movement of the stator is prevented by a shrink fit connection. Consequently, vibrations of the electric motor 1 during use, and particularly during the start-up and shut-down phases of the motor operation, may be effectively dampened.

In the example of Figure 3, the electric motor 1 is provided with two bolts 13 extending through the intermediate plates 6 at each of the first contact surfaces 9 and engaging corresponding two threaded holes 14 provided to the second contact surfaces 11 at exactly predetermined positions. In other words, in said example two bolts 13 are arranged into corresponding two parallel drilled holes extending at each pair of the first 9 and the second contact surfaces 11 of the stator-stator frame contact interface and engage the corresponding two threaded holes 14 that together with the drilled holes create a continuous, undisrupted pathway for the bolts 13. The number of the bolts 13 may be based on, for example, the tensioning force required in each application or construction of the electric motor 1 and may deviate from said example in other embodiments of the electric motor 1. Preferably, at least two bolts 13 are provided to each of the first contact surfaces 9. The drilled holes of the stator frame 5 may also be provided with countersinks or groove-shaped immersed sections 104 as illustrated in the example of Figure 3, so as to enable the bolts 13 to be entirely embedded within the outer perimeter of the stator frame 5.

With the arrangement of the stator-stator frame contact interface as described, in other words by arranging the bolts 13 to extend between the intermediate plates 6 and the beams 4 of the stator, distance between the intermediate plates 6 may be set independently of the length of the stator 2 in its axial direction. More precisely, in said arrangement the distance between the outermost intermediate plates 6 may also be set smaller than the stator length 2, as opposed to conventional motor constructions wherein a contact interface is formed between the intermediate plates and end rings of the stator. This, in turn, allows the same stator frame design to be used in connection with various stator constructions having different outer dimensions, eliminating the need to modify the stator frame construction for each use case of the electric motor 1. In the example of Figure 1, for example, the two intermediate plates 6 are located at a distance 22 from each other that is smaller than the length of the stator 2.

In the example of Figure 3, each of the intermediate plates 6 comprise four first contact surfaces 9, and the bolts 13 at two of these first contact surfaces 9 extend in an angle 21 of 20 - 25 degrees, preferably approximately 22 degrees, to the horizontal direction from above into the threaded holes 14 of the second contact surfaces 11. In other words, said two first contact surfaces 9, which in said example are provided to protrusions 20 having an extension similar to that of the corresponding bolts 13, are located at opposite sides of the center axis 8 such that the bolts 13 at these contact surfaces form an angle of approximately 22 degrees with the horizontal direction indicated with a dashed line in Figure 3. In this context, the horizontal direction refers to the direction as perceived in the installed position of the electric motor 1. In other embodiments of the electric motor 1, the angle 21 may also be set to be smaller than illustrated in the example of Figure 3, and it may be set based on, for example, number of poles of the electric motor.

Simultaneously, in said example the two other first contact surfaces 9 are located directly above and below the stator 2. With the arrangement as described, an optimal distribution of forces affecting the stator-stator frame contact interface may be achieved between the four points of contact between the stator 2 and the stator frame 5, and the vibrations of the electric motor 1 during use, particularly during the start-up and shut-down phases of the motor operation, may be further dampened. The arrangement and number of the contact points between the stator 2 and the stator frame 5 may be based on, for example, the estimated maximum loading condition of the electric motor 1 in each application, such that the number of the first contact surfaces 9 at each of the intermediate plates 6 is preferably at least four, and that the bolts 13 at two of these contact surfaces form an angle 21 of preferably 20 to 25 degrees to the horizontal direction. The first 9 and the second contact surfaces 11 may be oriented such in relation to the bolts 13 that the bolts 13 form an approximately right angle with the corresponding contact surfaces.

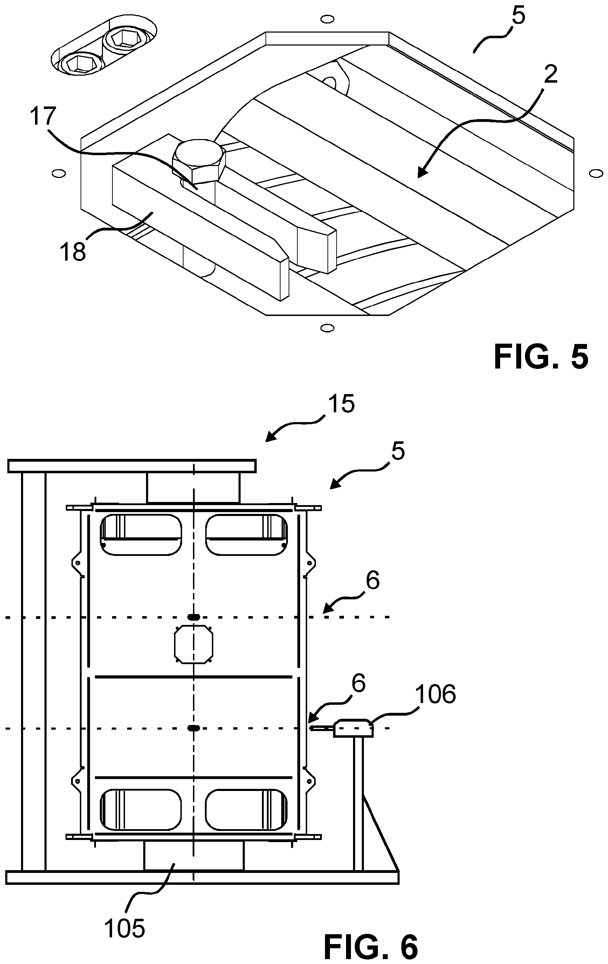

Figure 5 illustrates a detail of the electric motor according to the example of Figure 1. In this example, the stator 2 further comprises a guide pin 17 extending radially outwards from the stator 2, and the stator frame 5 further comprises a centering fork 18 opening in the direction of the center axis 8. With said arrangement, the centering fork 18 may be used for receiving the guide pin 17 when the stator 2 is received in the stator frame 5 during the assembly phase of the electric motor 1, so as to guide the stator 2 into its correct angular position in relation to the stator frame 5. In other words, the guide pin 17 and the centering fork 18 in said example are reciprocally positioned such that said correct angular position of the stator 2 is obtained when the guide pin 17 is received into the centering fork 18. In the example of Figure 5, wherein the stator 2 is presented in its installed final position within the stator frame 5, the guide pin 17 extends through a slit formed between the two limbs of the centering fork 18.

The electric motor 1 according to the example of Figure 1 may be assembled by first separately machining the stator 2 and the stator frame 5. In the method of assembling the electric motor 1, the stator frame 5 is machined with a machining station 15, said machining station 15 supporting the stator frame 5 during the machining as schematically illustrated in Figure 6. The machining the stator frame 5 comprises, in a first phase, machining the first contact surfaces 9 of the at least two intermediate plates 6 facing towards the center axis 8 so that the first contact surfaces 9 together define the circle with the first radius 10 at each of the intermediate plates 6, as described above in relation to Figure 3. In praxis, said machining of the first contact surfaces 9 may be performed by, for example, precisely positioning the stator frame 5 in a vertical position on a rotating stand or spindle 105 of the machining station 15, such that the axis of rotation of the spindle 105 corresponds to the center axis 8 to be defined by the first contact surfaces 9 after the machining. Then, for example by utilizing rotational movement of the stator frame 5 precisely positioned and attached to the spindle 105, a machining tool placed inside the openings 7 of the intermediate plates 6 may be used for removing material from the intermediate plates 6 so as to obtain the first contact surfaces 9 having the first radius 10 and the center axis 8.

In a second phase of the machining of the stator frame 5, which may be implemented before or after the above described first phase, the stator frame 5 is drilled through the at least two intermediate plates 6 between the outside of the stator frame 5 and the openings 7 at an exactly predetermined position of each of the first contact surfaces 9. By utilizing the machining station 15, possibly by not moving the stator frame on the machining station between the first and second phase, said exactly predetermined position may be obtained by, for example, placing a drilling tool 106 with a drilling head to a position in the machining station 15 precisely corresponding to the desired position of the drilled holes in the direction of the center axis 8, as schematically illustrated in the example of Figure 6. In Figure 6, the positions of the intermediate plates 6 are indicated with dashed lines. Said placing of the drilling tool 106 may be performed based on, for example, the known position of the spindle 105 and of the stator frame 5 placed on the spindle 105. Then, the stator frame 5 may be rotated in relation to the drilling head to obtain the correct angular position of each hole to be drilled, in other words position along the circumference of the circle with the first radius 10.

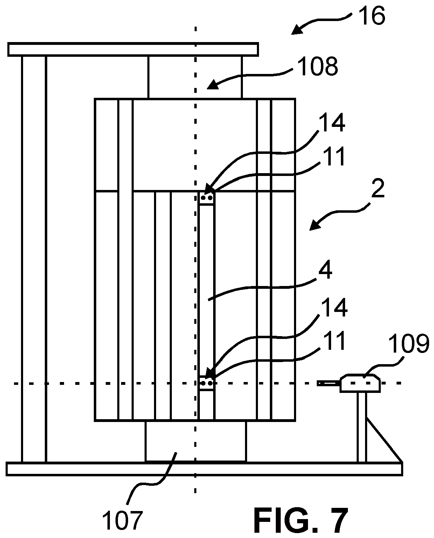

The machining of the stator 2 according to the example of Figure 2 is performed with a machining station 16 supporting the stator 2 during the machining, as schematically illustrated in Figure 7. Said machining of the stator 2 comprises, in a first phase, machining the second contact surfaces 11 of the stator 2 provided on the beams 4 so that the second contact surfaces 11 together define the circle with the second radius 12, as described above in relation to Figure 3. The beams 4, as illustrated in Figures 2 and 7 for example, extend in the longitudinal direction at the outer perimeter of the stator 2. In praxis, said machining of the second contact surfaces 11 may be performed by, for example, precisely positioning the stator 2 in a vertical position on a rotating stand or spindle 107 of the machining station 16, such that the axis of rotation of the spindle 107 corresponds to a center axis 108 to be defined by the second contact surfaces 11 after the machining. Then, for example by utilizing rotational movement of the stator 2 precisely positioned and attached to the spindle 107, a machining tool placed outside the stator 2 may be used for removing material from the beams 4 or, as in the case of the example of Figure 1, the contact plates 19 provided on the beams 4, so as to obtain the second contact surfaces 11 having the second radius 12. In embodiments where the contact plates 19 are used, they may be provided on the beams 4 by welding before the machining of the second contact surfaces 11.

In a second phase of the machining of the stator 2, which may be implemented before or after the above mentioned first phase, a threaded hole 14 is prepared at an exactly predetermined position of each of the second contact surfaces 11. Said preparing of the threaded hole 14 may be performed through a single drilling step wherein the hole and the thread are provided simultaneously, or through separate steps of first preparing an unthreaded hole and then providing it with a thread. By utilizing the machining station 16, possibly by not moving the stator on the machining station between the first and second phase, said exactly predetermined position may be obtained by, for example, placing a drilling tool 109 with a drilling head to a position in the machining station 16 precisely corresponding to the desired positions of the threaded holes 14 in the direction of the center axis 108, as schematically illustrated in the example of Figure 7. Said placing of the drilling tool 109 may be performed based on, for example, the known position of the spindle 107 and of the stator 2 placed on the spindle 107. Then, the stator 2 may be rotated in relation to the drilling head to obtain the correct angular position of each threaded hole 14. In some variations of the method of assembling the electric motor 1, the machining station 15 used for the machining of the stator frame 5 may also be used for the machining of the stator 2, such that no separate machining station 16 is needed for machining the stator 2.

After the machining, the method of assembling the electric motor 1 according to the example of Figure 1 is continued by inserting the stator 2 into the stator frame 5 through the openings 7 to a position in which a tight contact is formed between the first contact surfaces 9 of the intermediate plates 6 and corresponding second contact surfaces 11 of the stator 2. In praxis, said inserting may be performed by, for example, lowering the stator 2 in the vertical position towards the stator 5 frame from above, such that the openings 7 are positioned to open upwards for receiving the stator 2. Said tight contact is then formed as the first contact surfaces 9 defining the circle with the first radius 10 and the corresponding second contact surfaces 11 defining the circle with the second radius 12 are positioned to face towards each other, the first radius 10 being slightly larger than the second radius 12. In some variations of the method, the method may further comprise heating the stator frame 5 before said inserting the stator 2 into the stator frame 5, so as to form the tight contact by creating a shrink fit between the first contact surfaces 9 and the corresponding second contact surfaces 11.

In the electric motor 1 according to the examples 1 to 7, wherein the stator 2 is provided with the guide pin 17 and the stator frame 5 is provided with the centering fork 18, the inserting the stator 2 into the stator frame 5 may also comprise the step of guiding the guide pin 17 into the centering fork 18. With said arrangement, the guide pin 17 and the centering fork 18 may be used for positioning the stator 2 in relation to the stator frame 5 to ensure the correct angular positioning of said parts around the center axis 8. Similarly, in embodiments of the electric motor 1 where at least one of the second contact surfaces 11 is provided with the flange 23, as described above in relation to Figure 4, said flange may be used for positioning the stator 2 in relation to the stator frame 5 in the axial direction of the stator 2.

When the stator 2 and the stator frame 5 have been positioned to their correct reciprocal positions, the assembly of the electric motor 1 is continued by providing the bolts 13 to extend through the drillings provided to the stator frame 5 and to threadedly engage the threaded holes 14 provided to the stator 2. More precisely, the bolts 13 may be inserted to the holes drilled into the stator frame 5 from the outside of the frame, such that their threaded ends engage the threads provided to the threaded holes 14, and the other ends of the bolts 13 that may be provided with the bolt head 103 engage the opening areas of the drilled holes of the stator frame 5. At this point, the bolts 13 may be tensioned to provide the intended level of compressive force to the stator-stator frame contact interface, locking the stator 2 and the stator frame 5 together to withstand both axial and torsional loads subjected towards them.

It is to be understood that the above description and the accompanying figures are only intended to illustrate the present invention. It will be obvious to a person skilled in the art that the invention can be varied and modified without departing from the scope of the invention.

## Claims

1. A method for assembling an electric motor (1), **characterized in that** the method comprises:
machining a stator frame (5) with at least two intermediate plates (6) having openings (7) with a machining station (15) supporting the stator frame (5) during the machining, said machining the stator frame (5) comprising:
in a first phase, machining first contact surfaces (9) of the at least two intermediate plates (6) facing towards a center axis (8), said first contact surfaces (9) together defining a circle with a first radius (10) at each intermediate plate (6), and
in a second phase, before or after the first phase, drilling the stator frame (5) through the at least two intermediate plates (6) between the outside of the stator frame (5) and the openings (7) at an exactly predetermined position of each of the first contact surfaces (9),
machining a stator (2) with a machining station (16) supporting the stator (2) during the machining, said machining the stator (2) comprising:
in a first phase, machining second contact surfaces (11) of the stator (2) which are provided on beams (4) extending in a longitudinal direction at an outer perimeter of the stator (2), so that the second contact surfaces (11) together define a circle with a second radius (12), and
in a second phase, after or before said first phase, preparing a threaded hole (14) at an exactly predetermined position of each of the second contact surfaces (11),
inserting the stator (2) into the stator frame (5) through the openings (7), to a position in which a tight contact is formed between the first contact surfaces (9) of the at least two intermediate plates (6) and corresponding second contact surfaces (11) of the stator (2), and
providing bolts (13) to extend through the drillings provided to the stator frame (5) and to threadedly engage the threaded holes (14) provided to the stator (2).

2. The method according to claim 1, **characterized in that** the method further comprises:
heating the stator frame (5) before the inserting the stator (2) into the stator frame (5) to form said tight contact by creating a shrink fit between the first contact surfaces (9) of the at least two intermediate plates (6) and the corresponding second contact surfaces (11) of the stator (2).

3. The method according to claim 1 or 2, **characterized in that** the inserting the stator (2) into the stator frame (5) comprises guiding a guide pin (17) extending radially outwards from the stator (2) into a centering fork (18) provided to the stator frame (5) and opening in the direction of the center axis (8).

4. The method according to any one of the claims 1 to 3, **characterized in that** the method further comprises:
welding contact plates (19) on the beams (4) for providing the second contact surfaces (11) before the machining the second contact surfaces (11).

5. An electric motor (1), **characterized in that** the electric motor (1) comprises:
a stator (2) with an outer perimeter being provided with beams (4) extending in a longitudinal direction of the stator (2), and
a stator frame (5) surrounding the stator (2), the stator frame (5) comprising at least two intermediate plates (6) having openings (7) for receiving the stator (2), wherein
the at least two intermediate plates (6) comprise first contact surfaces (9) facing towards a center axis (8), the first contact surfaces (9) together defining a circle with a first radius (10) at each intermediate plate (6) and forming a tight contact with corresponding second contact surfaces (11) provided on the beams (4), the second contact surfaces (11) together defining a circle with a second radius (12), and
the electric motor (1) is provided with bolts (13) extending through the at least two intermediate plates (6) between the outside of the stator frame (5) and the openings (7) at an exactly predetermined position of each of the first contact surfaces (9) and engaging threaded holes (14) provided to an exactly predetermined position of each of the second contact surfaces (11).

6. The electric motor (1) according to claim 5, **characterized in that** at least one of the first contact surfaces (9) is provided to a protrusion (20) extending towards the center of the openings (7) at each of the openings (7), and
at least one of the second contact surfaces (11) is provided to a contact plate (19) provided on the beams (4).

7. The electric motor (1) according to claim 5 or 6, **characterized in that** the first contact surfaces (9) are connected to the corresponding second contact surfaces (11) through a shrink fit.

8. The electric motor (1) according to any one of the claims 5 to 7, **characterized in that** each of the at least two intermediate plates (6) comprise at least four first contact surfaces (9), and
bolts (13) at two of the at least four first contact surfaces (9) extend in an angle (21) of 20 to 25 degrees to the horizontal direction from above into the threaded holes (14) of the second contact surfaces (11).

9. The electric motor (1) according to any one of the claims 5 to 8, **characterized in that** the electric motor (1) is provided with at least two bolts (13) extending through the at least two intermediate plates (6) at each of the first contact surfaces (9) and engaging corresponding at least two threaded holes (14) provided to exactly predetermined positions of each of the second contact surfaces (11).

10. The electric motor (1) according to any one of the claims 5 to 9, **characterized in that** the stator (2) further comprises a guide pin (17) extending radially outwards from the stator (2), and
the stator frame (5) further comprises a centering fork (18) opening in the direction of the center axis (8) for receiving the guide pin (17) when the stator (2) is received in the stator frame (5).

11. The electric motor (1) according to any one of the claims 5 to 10, **characterized in that** the at least two intermediate plates (6) are located at a distance (22) from each other that is smaller than the length of the stator (2).

12. The electric motor (1) according to any one of the claims 5 to 11, **characterized in that** at least one of the second contact surfaces (11) is provided with a flange (23) protruding outwards from the second contact surface for inhibiting movement of the stator (2) through the openings (7) past a predetermined position.
